# FASCICULE DE BREVET EUROPEEN

(11) **EP 4 497 361 B1**
(45) Date de publication et mention de la délivrance du brevet: **08.04.2026**
(21) Numéro de dépôt: 24189977.2
(22) Date de dépôt: 22.07.2024
(51) Int. Cl.: A47L 5/36, A47L 9/24, F16L 27/00, F16L 33/00, F16L 37/098

(54) **CONDUIT D'ASPIRATEUR ÉQUIPÉ D'UN DISPOSITIF D'ARTICULATION**
STAUBSAUGERKANAL MIT GELENKVORRICHTUNG
VACUUM CLEANER SUCTION TUBE WITH A HINGE DEVICE

(30) Priorité: 26.07.2023 FR 2308050
(43) Date de publication de la demande: 29.01.2025
(73) Titulaire: SEB S.A., 69130 Ecully (FR)
(72) Inventeur: PHILIPPE, Christelle, 69134 ECULLY CEDEX (FR); GARO, Youenn, 69134 ECULLY CEDEX (FR); ANQUETIN, Alex, 69134 ECULLY CEDEX (FR)
(74) Mandataire: SEB Développement

(56) Documents cités:
- EP-A1- 3 420 875
- EP-A1- 3 656 268
- DE-U1- 212017 000 236

## Description

### Domaine technique

La présente invention concerne le domaine des conduits d'aspirateur, et en particulier des aspirateurs équipés de tels conduits d'aspirateur.

### Etat de la technique

Un aspirateur comprend de façon connue un boîtier d'aspirateur équipé d'une unité d'aspiration, un suceur configuré pour être en contact avec un sol à nettoyer, et un conduit d'aspirateur reliant fluidiquement et mécaniquement le boîtier d'aspirateur au suceur et définissant un passage d'écoulement d'air.

Afin de faciliter le rangement de l'aspirateur ou un nettoyage avec l'aspirateur sous des meubles, le conduit d'aspirateur comprend avantageusement :
- une première partie de conduit rigide et une deuxième partie de conduit rigide,
- un conduit flexible reliant les première et deuxième parties de conduit rigides et définissant au moins partiellement le passage d'écoulement d'air, le conduit flexible comportant une partie tubulaire flexible, une première bague de fixation qui est fixée à une première portion d'extrémité de la partie tubulaire flexible et qui est fixée de manière inamovible à la première partie de conduit rigide, et une deuxième bague de fixation qui est fixée à une deuxième portion d'extrémité de la partie tubulaire flexible et qui est fixée de manière inamovible à la deuxième partie de conduit rigide,
- un dispositif d'articulation reliant les première et deuxième parties de conduit rigides entre elles, le dispositif d'articulation comportant un axe d'articulation et étant configuré pour permettre un pivotement de la première partie de conduit rigide par rapport à la deuxième partie de conduit rigide autour de l'axe d'articulation et entre une configuration dépliée dans laquelle les première et deuxième parties de conduit rigides sont sensiblement alignées l'une par rapport à l'autre et une configuration pliée dans laquelle les première et deuxième parties de conduit rigides définissent entre elles un angle inférieur à 180°, et
- un organe de verrouillage configuré pour verrouiller, de manière réversible, les première et deuxième parties de conduit rigides dans la configuration dépliée.

Lors de l'utilisation d'un tel conduit d'aspirateur, des déchets, aspirés depuis un suceur raccordé au conduit flexible, sont susceptibles de s'accumuler, voire de se coincer, dans la partie tubulaire flexible du conduit flexible, ce qui peut conduire à une obstruction partielle ou totale de la partie tubulaire flexible. Or, la partie tubulaire flexible étant difficilement accessible depuis l'extrémité du conduit d'aspirateur reliée au suceur et également depuis l'extrémité du conduit d'aspirateur reliée au boîtier d'aspirateur, une obstruction de la partie tubulaire flexible peut rendre totalement inopérant le conduit d'aspirateur. Un tel conduit d'aspirateur est connu par le document EP 3 656 268 A1.

De même, en cas d'endommagement de la partie tubulaire flexible, tel qu'une rupture partielle, en raison de déplacements répétés des première et deuxième parties de conduit rigides entre les configurations dépliée et pliée, les performances de nettoyage du conduit d'aspirateur sont fortement dégradées.

### Résumé de l'invention

La présente invention vise à remédier à tout ou partie de ces inconvénients.

Le problème technique à la base de l'invention consiste notamment à fournir un conduit d'aspirateur qui soit de structure simple, fiable et ergonomique.

A cet effet, la présente invention concerne un conduit d'aspirateur définissant un passage d'écoulement d'air et comprenant :
- une première partie de conduit rigide et une deuxième partie de conduit rigide,
- un conduit flexible reliant les première et deuxième parties de conduit rigides et définissant au moins partiellement le passage d'écoulement d'air, le conduit flexible comportant une partie tubulaire flexible, une première bague de fixation qui est fixée à une première portion d'extrémité de la partie tubulaire flexible, et une deuxième bague de fixation qui est fixée à une deuxième portion d'extrémité de la partie tubulaire flexible,
- un dispositif d'articulation reliant les première et deuxième parties de conduit rigides entre elles, le dispositif d'articulation comportant un axe d'articulation et étant configuré pour permettre un pivotement de la première partie de conduit rigide par rapport à la deuxième partie de conduit rigide autour de l'axe d'articulation et entre une configuration dépliée dans laquelle les première et deuxième parties de conduit rigides sont sensiblement alignées l'une par rapport à l'autre et une configuration pliée dans laquelle les première et deuxième parties de conduit rigides définissent entre elles un angle inférieur à 180°,
- un organe de verrouillage configuré pour verrouiller, de manière réversible, les première et deuxième parties de conduit rigides dans la configuration dépliée.

La première bague de fixation est configurée pour être fixée de manière amovible à la première partie de conduit rigide, et la deuxième bague de fixation est configurée pour être fixée de manière amovible à la deuxième partie de conduit rigide.

Une telle configuration du conduit flexible permet un démontage de ce dernier, notamment en vue de le nettoyer, de retirer des gros déchets coincés dans le conduit flexible ou encore de le remplacer en cas d'endommagement.

Ainsi, le conduit d'aspirateur selon la présente invention présente une fiabilité accrue par rapport aux conduits d'aspirateur selon l'art antérieur.

Le conduit d'aspirateur peut en outre présenter une ou plusieurs des caractéristiques suivantes, prises seules ou en combinaison.

Selon un mode de réalisation de l'invention, la première bague de fixation comporte un premier dispositif de verrouillage configuré pour verrouiller, de manière réversible, la première bague de fixation sur la première partie de conduit rigide, et la deuxième bague de fixation comporte un deuxième dispositif de verrouillage configuré pour verrouiller, de manière réversible, la deuxième bague de fixation sur la deuxième partie de conduit rigide.

Selon un mode de réalisation de l'invention, le premier dispositif de verrouillage comporte au moins un premier élément de verrouillage, tel qu'un premier bras de verrouillage ou une première languette de verrouillage, mobile entre une configuration de verrouillage dans laquelle l'au moins un premier élément de verrouillage est configuré pour coopérer avec la première partie de conduit rigide de manière à verrouiller la première bague de fixation sur la première partie de conduit rigide, et une configuration de déverrouillage dans lequel l'au moins un premier élément de verrouillage est configuré pour libérer la première partie de conduit rigide de manière à autoriser un retrait de la première bague de fixation hors de la première partie de conduit rigide, et le deuxième dispositif de verrouillage comporte au moins un deuxième élément de verrouillage, tel qu'un deuxième bras de verrouillage ou une deuxième languette de verrouillage, mobile entre une configuration de verrouillage dans laquelle l'au moins un deuxième élément de verrouillage est configuré pour coopérer avec la deuxième partie de conduit rigide de manière à verrouiller la deuxième bague de fixation sur la deuxième partie de conduit rigide, et une configuration de déverrouillage dans lequel l'au moins un deuxième élément de verrouillage est configuré pour libérer la deuxième partie de conduit rigide de manière à autoriser un retrait de la deuxième bague de fixation hors de la deuxième partie de conduit rigide.

Selon un mode de réalisation de l'invention, chacun de l'au moins un premier élément de verrouillage et l'au moins un deuxième élément de verrouillage s'étend selon une direction d'extension qui est sensiblement parallèle à l'axe central du conduit flexible lorsqu'il occupe la configuration de verrouillage.

Selon un mode de réalisation de l'invention, la première bague de fixation comporte un premier corps de bague annulaire et l'au moins un premier élément de verrouillage s'étend à partir du premier corps de bague annulaire, et la deuxième bague de fixation comporte un deuxième corps de bague annulaire et l'au moins un deuxième élément de verrouillage s'étend à partir du deuxième corps de bague annulaire.

Selon un mode de réalisation de l'invention, chacun de l'au moins un premier élément de verrouillage et de l'au moins un deuxième élément de verrouillage est élastiquement déformable entre la configuration de verrouillage et la configuration de déverrouillage.

Selon un mode de réalisation de l'invention, chacun de l'au moins un premier élément de verrouillage et de l'au moins un deuxième élément de verrouillage est situé sur un côté latéral du conduit d'aspirateur. En d'autres termes, l'au moins un premier élément de verrouillage est un premier élément de verrouillage latéral, et l'au moins un deuxième élément de verrouillage est un deuxième élément de verrouillage latéral.

Selon un mode de réalisation de l'invention, chacun de l'au moins un premier élément de verrouillage et de l'au moins un deuxième élément de verrouillage est accessible depuis l'extérieur du conduit d'aspirateur.

Selon un mode de réalisation de l'invention, l'au moins un premier élément de verrouillage est configuré pour être accessible depuis un côté latéral de la première partie de conduit rigide, et l'au moins un deuxième élément de verrouillage est configuré pour être accessible depuis un côté latéral de la deuxième partie de conduit rigide.

Selon un mode de réalisation de l'invention, le premier dispositif de verrouillage comporte au moins un premier orifice de verrouillage qui est prévu sur la première partie de conduit rigide et qui est configuré pour coopérer avec l'au moins un premier élément de verrouillage lorsque l'au moins un premier élément de verrouillage est dans la configuration de verrouillage, et le deuxième dispositif de verrouillage comporte au moins un deuxième orifice de verrouillage qui est prévu sur la deuxième partie de conduit rigide et qui est configuré pour coopérer avec l'au moins un deuxième élément de verrouillage lorsque l'au moins un deuxième élément de verrouillage est dans la configuration de verrouillage.

Selon un mode de réalisation de l'invention, l'au moins un premier orifice de verrouillage débouche dans une surface externe de la première partie de conduit rigide et est configuré pour permettre un accès à l'au moins un premier élément de verrouillage depuis l'extérieur du conduit d'aspirateur et pour permettre un déplacement de l'au moins un premier élément de verrouillage dans la configuration de déverrouillage, et l'au moins un deuxième orifice de verrouillage débouche dans une surface externe de la deuxième partie de conduit rigide et est configuré pour permettre un accès à l'au moins un deuxième élément de verrouillage depuis l'extérieur du conduit d'aspirateur et pour permettre un déplacement de l'au moins un deuxième élément de verrouillage dans la configuration de déverrouillage.

Selon un mode de réalisation de l'invention, l'au moins un premier orifice de verrouillage est configuré pour être situé en regard de l'au moins un premier élément de verrouillage, et par exemple en regard d'un premier doigt de verrouillage équipant l'au moins un premier élément de verrouillage, lorsque la première bague de fixation est fixée à la première partie de conduit rigide, et l'au moins un deuxième orifice de verrouillage est configuré pour être situé en regard de l'au moins un deuxième élément de verrouillage, et par exemple en regard d'un deuxième doigt de verrouillage équipant l'au moins un deuxième élément de verrouillage, lorsque la deuxième bague de fixation est fixée à la deuxième partie de conduit rigide.

Selon un mode de réalisation de l'invention, chacun de l'au moins un premier orifice de verrouillage et de l'au moins un deuxième orifice de verrouillage est oblong.

Selon un mode de réalisation de l'invention, l'au moins un premier orifice de verrouillage est prévu sur une portion latérale de la première partie de conduit rigide, et l'au moins un deuxième orifice de verrouillage est prévu sur une portion latérale de la deuxième partie de conduit rigide.

Selon un mode de réalisation de l'invention, le premier dispositif de verrouillage comporte deux premiers éléments de verrouillage qui sont diamétralement opposés par rapport à un axe central du conduit flexible, et le deuxième dispositif de verrouillage comporte deux deuxièmes éléments de verrouillage qui sont diamétralement opposés par rapport à l'axe central du conduit flexible.

Il résulte de la configuration précitée que, lorsque les première et deuxième parties de conduit rigides sont dans la configuration dépliée, chaque élément de verrouillage est disposé sur un côté latéral du conduit d'aspirateur et à distance du dispositif d'articulation.

Une telle configuration, permet d'accéder facilement aux deux premiers et aux deux deuxièmes éléments de verrouillage sans être gêné par le dispositif d'articulation.

Une telle configuration des premier et deuxième dispositifs de verrouillage permet un démontage aisé du conduit flexible tout simplement en exerçant, avec le pouce et l'index d'une même main, successivement une pression sur les deux premiers éléments de verrouillage afin de les déplacer dans la configuration de déverrouillage et de pouvoir retirer la première bague de fixation hors de la première partie de conduit rigide, puis une pression sur les deux deuxièmes éléments de verrouillage afin de les déplacer dans la configuration de déverrouillage et de pouvoir retirer la deuxième bague de fixation hors de la deuxième partie de conduit rigide.

Selon un mode de réalisation de l'invention, les deux premiers éléments de verrouillage sont configurés pour être rapprochés l'un de l'autre lorsqu'ils occupent la configuration de déverrouillage, et pour être éloignés l'un de l'autre lorsqu'ils occupent la configuration de verrouillage, et les deux deuxièmes éléments de verrouillage sont configurés pour être rapprochés l'un de l'autre lorsqu'ils occupent la configuration de déverrouillage, et pour être éloignés l'un de l'autre lorsqu'ils occupent la configuration de verrouillage.

Selon un mode de réalisation de l'invention, le conduit flexible comporte un premier joint d'étanchéité annulaire fixé à la première bague de fixation et configuré pour coopérer de manière étanche avec la première partie de conduit rigide, et un deuxième joint d'étanchéité annulaire fixé à la deuxième bague de fixation et configuré pour coopérer de manière étanche avec la deuxième partie de conduit rigide.

Selon un mode de réalisation de l'invention, la première partie de conduit rigide comporte une première portion de montage qui est tubulaire et qui est pourvue d'une première ouverture d'insertion, et la deuxième partie de conduit rigide comporte une deuxième portion de montage qui est tubulaire et qui est pourvue d'une deuxième ouverture d'insertion, la première bague de fixation étant configurée pour être insérée dans la première portion de montage via la première ouverture d'insertion et la deuxième bague de fixation étant configurée pour être insérée dans la deuxième portion de montage via la deuxième ouverture d'insertion.

Selon un mode de réalisation de l'invention, l'au moins un premier orifice de verrouillage est prévu sur la première portion de montage, et l'au moins un deuxième orifice de verrouillage est prévu sur la première portion de montage.

Selon un mode de réalisation de l'invention, la première bague de fixation est configurée pour être fixée de manière amovible à la première portion de montage, et la deuxième bague de fixation est configurée pour être fixée de manière amovible à la deuxième portion de montage.

Selon un mode de réalisation de l'invention, la première partie de conduit rigide est configurée pour être reliée fluidiquement à un boîtier d'aspirateur équipé d'une unité d'aspiration, et la deuxième partie de conduit rigide est configurée pour être reliée fluidiquement à un suceur configuré pour être en contact avec un sol à nettoyer.

Selon un mode de réalisation de l'invention, le conduit d'aspirateur comporte un premier tube d'aspiration raccordé fluidiquement et mécaniquement à la première partie de conduit rigide, et un deuxième tube d'aspiration raccordé fluidiquement et mécaniquement à la deuxième partie de conduit rigide.

Selon un mode de réalisation de l'invention, le premier tube d'aspiration est configuré pour être raccordé fluidiquement et mécaniquement au boîtier d'aspirateur, et le deuxième tube d'aspiration est configuré pour être raccordé fluidiquement et mécaniquement au suceur.

Selon un mode de réalisation de l'invention, la première partie de conduit rigide comporte une première portion de raccordement raccordée fluidiquement et mécaniquement au premier tube d'aspiration, et la deuxième partie de conduit rigide comporte une deuxième portion de raccordement raccordée fluidiquement et mécaniquement au deuxième tube d'aspiration.

Selon un mode de réalisation de l'invention, la première portion de raccordement, la deuxième portion de raccordement, les premier et deuxième tubes d'aspiration et le conduit flexible définissent le passage d'écoulement d'air.

Selon un mode de réalisation de l'invention, le dispositif d'articulation est configuré pour être situé au-dessus du conduit flexible lorsque le conduit d'aspirateur est en conditions normales d'utilisation. En d'autres termes, le dispositif d'articulation est configuré pour être orienté vers le haut, c'est-à-dire pour être directement visible par un utilisateur, lorsque le conduit d'aspirateur est en conditions normales d'utilisation. De façon avantageuse, l'axe d'articulation n'est pas sécant avec le conduit flexible.

Selon un mode de réalisation de l'invention, l'organe de verrouillage est monté pivotant sur l'une des première et deuxième parties de conduit rigides autour d'un axe de pivotement qui est sensiblement parallèle à l'axe d'articulation et est configuré pour pivoter entre une position de verrouillage dans laquelle l'organe de verrouillage est configuré pour coopérer avec l'autre des première et deuxième parties de conduit rigides de manière à verrouiller les première et deuxième parties de conduit rigides dans la configuration dépliée, et une position de libération dans laquelle l'organe de verrouillage est configuré pour libérer l'autre des première et deuxième parties de conduit rigides de manière à permettre un pivotement des première et deuxième parties de conduit rigides dans la configuration pliée.

Selon un mode de réalisation de l'invention, le conduit d'aspirateur comporte un organe d'actionnement solidaire en mouvement de l'organe de verrouillage et comportant une partie d'actionnement configurée pour être actionnée manuellement par un utilisateur, l'organe d'actionnement étant monté pivotant autour de l'axe de pivotement entre une position de repos et une position de déverrouillage, le conduit d'aspirateur étant configuré de telle sorte qu'un déplacement de l'organe d'actionnement de la position de repos à la position de déverrouillage entraîne un déplacement de l'organe de verrouillage de la position de verrouillage à la position de libération.

Selon un mode de réalisation de l'invention, l'organe de verrouillage et le dispositif d'articulation sont sensiblement diamétralement opposés par rapport à un axe longitudinal central du conduit d'aspirateur lorsque les première et deuxième parties de conduit rigides sont dans la configuration dépliée. Selon un tel mode de réalisation de l'invention, la partie d'actionnement pourrait être située du même côté que le dispositif d'articulation.

Selon un autre mode de réalisation de l'invention, l'organe de verrouillage et la partie d'actionnement sont sensiblement diamétralement opposés au dispositif d'articulation par rapport à un axe longitudinal central du conduit d'aspirateur lorsque les première et deuxième parties de conduit rigides sont dans la configuration dépliée.

Dans une configuration où le premier dispositif de verrouillage comporte deux premiers éléments de verrouillage qui sont diamétralement opposés par rapport à un axe central du conduit flexible, et le deuxième dispositif de verrouillage comporte deux deuxièmes éléments de verrouillage qui sont diamétralement opposés par rapport à l'axe central du conduit flexible, lorsque les première et deuxième parties de conduit rigides sont dans la configuration dépliée, chacun des premiers et deuxièmes éléments de verrouillage est disposé sur un côté latéral du conduit d'aspirateur entre d'une part le dispositif d'articulation et d'autre part l'organe de verrouillage. Une telle configuration permet d'accéder facilement aux deux premiers et aux deux deuxièmes éléments de verrouillage sans être gêné par le dispositif d'articulation ou l'organe de verrouillage.

Le conduit d'aspirateur comporte un capot de recouvrement configuré pour recouvrir au moins une portion d'extrémité distale, également nommée portion d'extrémité libre, de l'organe de verrouillage, le capot de recouvrement comportant une paroi de recouvrement principale qui est configurée de telle sorte que, lorsque les première et deuxième parties de conduit rigides sont dans la configuration dépliée, la portion d'extrémité distale de l'organe de verrouillage est disposée entre la paroi de recouvrement principale et l'autre des première et deuxième parties de conduit rigides. La présence d'un tel capot de recouvrement limite considérablement d'une part les risques d'accrochage de l'organe de verrouillage avec des éléments extérieurs lors de l'utilisation du conduit d'aspirateur en configuration dépliée, et donc les risques de grippage de l'organe de verrouillage, et d'autre part les risques de pincement des doigts d'un utilisateur lors d'un pivotement de l'organe de verrouillage entre la position de verrouillage et la position de libération.

Selon un mode de réalisation de l'invention, le capot de recouvrement est en outre configuré pour recouvrir latéralement l'organe de verrouillage.

Selon un mode de réalisation de l'invention, le capot de recouvrement est configuré pour rendre inaccessible l'organe de verrouillage lorsque les première et deuxième parties de conduit rigides occupent la configuration dépliée.

Selon un mode de réalisation de l'invention, l'organe de verrouillage et l'organe d'actionnement sont réalisés en une seule pièce. Une telle configuration du conduit d'aspirateur facilite l'assemblage du conduit d'aspirateur, et en diminue les coûts de fabrication.

La présente invention concerne en outre un aspirateur comportant :
- un boîtier d'aspirateur équipé d'une unité d'aspiration,
- un suceur configuré pour être en contact avec un sol à nettoyer, et
- un conduit d'aspirateur selon la présente invention, le conduit d'aspirateur reliant mécaniquement et fluidiquement le boîtier d'aspirateur au suceur.

L'aspirateur peut par exemple être un aspirateur balais ou un aspirateur traineau.

Selon un mode de réalisation de l'invention, l'aspirateur comporte en outre une crosse de préhension et un conduit d'aspiration flexible qui sont disposés entre le conduit d'aspirateur et le boîtier d'aspirateur et qui sont configurés pour relier mécaniquement et fluidiquement le boîtier d'aspirateur au suceur.

### Brève description des figures

De toute façon l'invention sera bien comprise à l'aide de la description qui suit en référence aux dessins schématiques annexés représentant, à titre d'exemple non limitatif, une forme d'exécution de ce conduit d'aspirateur.
Figure 1 est une vue en perspective d'un aspirateur selon l'invention.
Figure 2 est une vue partielle en perspective de côté d'un conduit d'aspirateur appartenant à l'aspirateur de la figure 1, montrant le conduit d'aspirateur en configuration dépliée.
Figure 3 est une vue partielle de dessous du conduit d'aspirateur de la figure 2.
Figure 4 est une vue partielle de dessus du conduit d'aspirateur de la figure 2.
Figure 5 est une vue partielle en perspective de côté du conduit d'aspirateur de la figure 2, montrant le conduit d'aspirateur en configuration dépliée.
Figure 6 est une vue partielle en perspective de dessous du conduit d'aspirateur de la figure 2, montrant le conduit d'aspirateur en configuration dépliée.
Figure 7 est une vue partielle en perspective de dessus du conduit d'aspirateur de la figure 2.
Figure 8 est une vue en perspective d'un organe de verrouillage, d'un organe d'actionnement et d'un capot de recouvrement appartenant au conduit d'aspirateur de la figure 2.
Figure 9 est une vue de dessus de l'organe de verrouillage, de l'organe d'actionnement et du capot de recouvrement de la figure 8.
Figure 10 est une vue en perspective arrière de l'organe de verrouillage, de l'organe d'actionnement et du capot de recouvrement de la figure 8.
Figure 11 est une vue en perspective du conduit d'aspirateur de la figure 2, montrant le conduit d'aspirateur en configuration dépliée et un conduit flexible qui est retiré hors de première et deuxième partie de conduit rigides appartenant au conduit d'aspirateur.
Figure 12 est une vue en coupe longitudinale du conduit d'aspirateur de la figure 2, montrant l'organe de verrouillage en position de verrouillage.
Figure 13 est une vue en coupe longitudinale du conduit d'aspirateur de la figure 2, montrant le conduit d'aspirateur en configuration pliée.

### Description détaillée

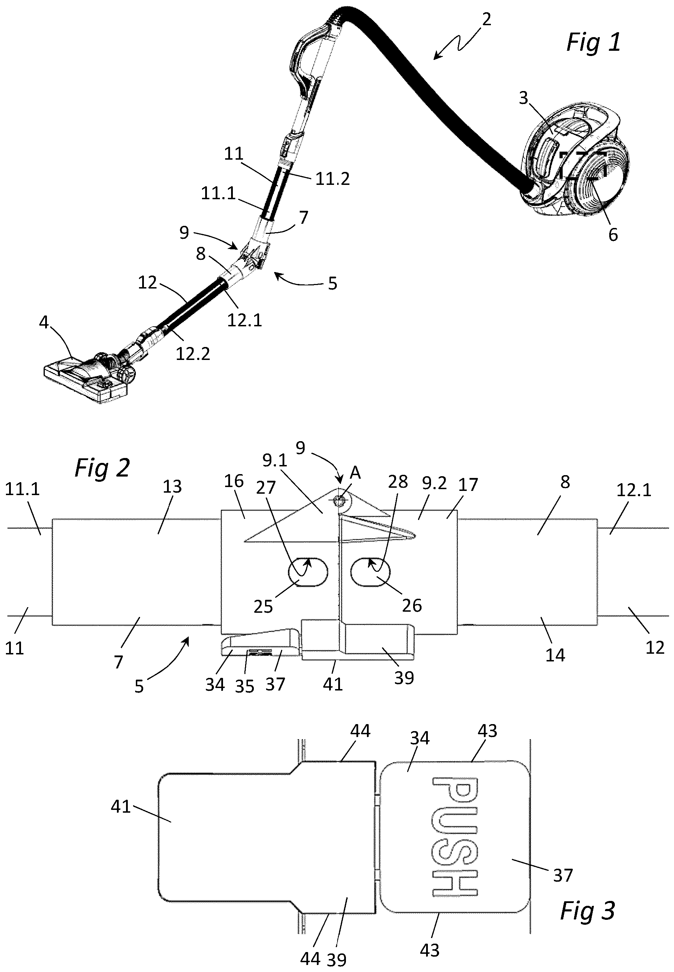

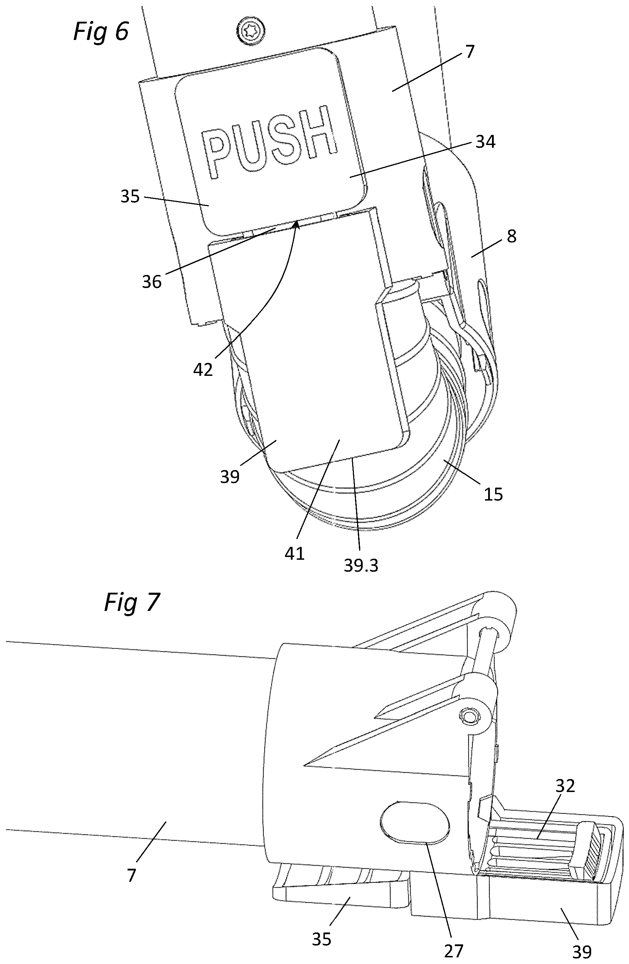

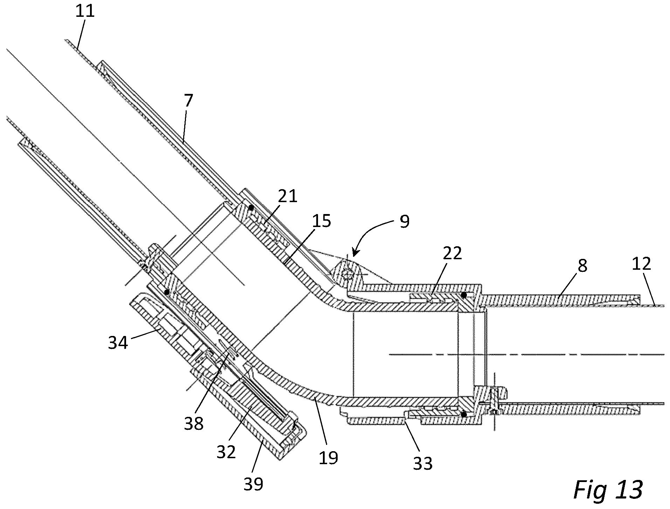

Les figures 1 à 13 représentent un aspirateur 2, et plus particulièrement un aspirateur traineau, qui comporte un boîtier d'aspirateur 3, un suceur 4 configuré pour être en contact avec un sol à nettoyer, et un conduit d'aspirateur 5 reliant fluidiquement et mécaniquement le boîtier d'aspirateur 3 au suceur 4. Le boîtier d'aspirateur 3 est équipé, de façon connue, notamment d'une unité d'aspiration 6 qui peut par exemple comporter un moto-ventilateur électrique, et d'un dispositif de séparation et de stockage de déchets.

Comme montré sur la figure 2, le conduit d'aspirateur 5 comprend une première partie de conduit rigide 7, une deuxième partie de conduit rigide 8, et un dispositif d'articulation 9 reliant les première et deuxième parties de conduit rigides 7, 8 entre elles.

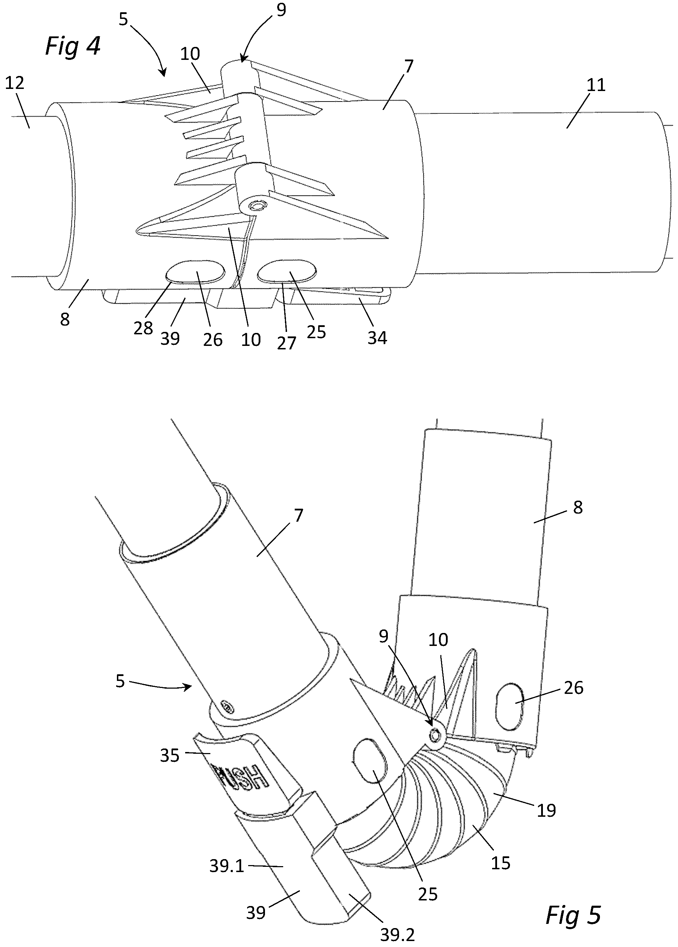

Le dispositif d'articulation 9 est configuré pour permettre un pivotement de la première partie de conduit rigide 7 par rapport à la deuxième partie de conduit rigide 8 autour d'un axe d'articulation A et entre une configuration dépliée (voir la figure 2) dans laquelle les première et deuxième parties de conduit rigides 7, 8 sont alignées l'une par rapport à l'autre et une configuration pliée (voir la figure 5) dans laquelle les première et deuxième parties de conduit rigides 7, 8 définissent entre elles un angle inférieur à 180°. De façon avantageuse, le dispositif d'articulation 9 est configuré pour être orienté vers le haut, c'est-à-dire pour faire face à un utilisateur, lorsque le conduit d'aspirateur 5 est en conditions normales d'utilisation, et est également configuré de telle sorte que l'axe d'articulation A n'est pas sécant avec les première et deuxième parties de conduit rigides 7, 8.

Selon le mode de réalisation représenté sur les figures, le dispositif d'articulation 9 comporte une première partie de charnière 9.1 fixée à une surface externe de la première partie de conduit rigide 7, et une deuxième partie de charnière 9.2 fixée à une surface externe de la deuxième partie de conduit rigide 8. De façon avantageuse, la deuxième partie de conduit rigide 8 comporte deux nervures de protection latérales 10 qui sont situées respectivement de part et d'autre de la deuxième partie de charnière 9.2 (voir les figures 4 et 5) et qui sont configurées pour éviter les pincements ou coincement d'objets extérieurs au niveau du dispositif d'articulation 9.

Le conduit d'aspirateur 5 comporte en outre un premier tube d'aspiration 11 comprenant une portion d'extrémité proximale 11.1 raccordée fluidiquement et mécaniquement à la première partie de conduit rigide 7, et une portion d'extrémité distale 11.2 configurée pour être raccordée fluidiquement et mécaniquement au boîtier d'aspirateur 3, par exemple directement dans le cas d'un aspirateur balais, ou par l'intermédiaire d'une crosse de préhension et d'un conduit d'aspiration flexible dans le cas d'un aspirateur traineau. Le conduit d'aspirateur 5 comporte également un deuxième tube d'aspiration 12 comprenant une portion d'extrémité proximale 12.1 raccordée fluidiquement et mécaniquement à la deuxième partie de conduit rigide 8, et une portion d'extrémité distale 12.2 configurée pour être raccordée fluidiquement et mécaniquement au suceur 4.

Selon le mode de réalisation représenté sur les figures, la première partie de conduit rigide 7 comporte une première portion de raccordement 13 qui est tubulaire et qui est raccordée fluidiquement et mécaniquement à la portion d'extrémité proximale 11.1 du premier tube d'aspiration 11, et la deuxième partie de conduit rigide 8 comporte une deuxième portion de raccordement 14 qui est tubulaire et qui est raccordée fluidiquement et mécaniquement à la portion d'extrémité proximale 12.1 du deuxième tube d'aspiration 12.

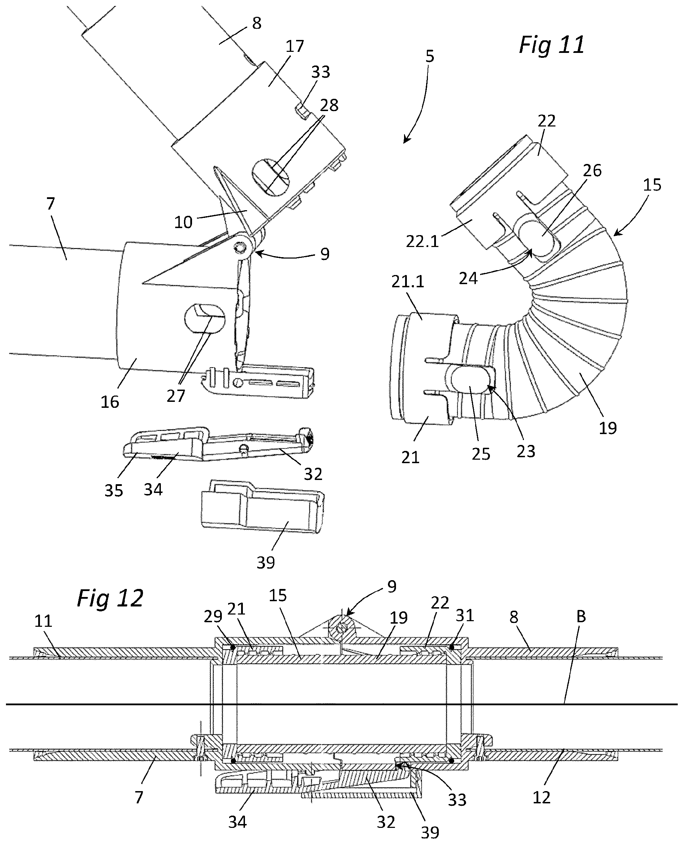

Comme montré plus particulièrement sur les figures 5 et 11, le conduit d'aspirateur 5 comporte de plus un conduit flexible 15 délimitant un passage d'écoulement interne et reliant les première et deuxième parties de conduit rigides 7, 8. Le conduit flexible 15 est plus particulièrement configuré pour relier fluidiquement les première et deuxième portions de raccordement 13, 14, de telle sorte que la première portion de raccordement 13, la deuxième portion de raccordement 14, les premier et deuxième tubes d'aspiration 11, 12 et le conduit flexible 15 définissent un passage d'écoulement d'air relié d'une part à l'unité d'aspiration 6 et d'autre part au suceur 4.

Selon le mode de réalisation représenté sur les figures, les première et deuxième parties de conduit rigides 7, 8 comportent respectivement des première et deuxième portions de montage 16, 17 qui sont tubulaires, et les première et deuxième portions de montage 16, 17 délimitent un logement de réception 18 dans lequel est monté le conduit flexible 15. De façon avantageuse, la première portion de montage 16 comporte une première ouverture d'insertion et la deuxième portion de montage 17 comporte une deuxième ouverture d'insertion qui est configurée pour être située en regard de la première ouverture d'insertion lorsque les première et deuxième parties de conduit rigides 7, 8 occupent la configuration dépliée.

Le conduit flexible 15 comporte plus particulièrement une partie tubulaire flexible 19, une première bague de fixation 21 qui est fixée à une première portion d'extrémité de la partie tubulaire flexible 19 et qui est configurée pour être fixée de manière amovible à la première portion de montage 16, et une deuxième bague de fixation 22 qui est fixée à une deuxième portion d'extrémité de la partie tubulaire flexible 19 et qui est configurée pour être fixée de manière amovible à la deuxième portion de montage 17. La première bague de fixation 21 est plus particulièrement configurée pour être insérée dans la première portion de montage 16 via la première ouverture d'insertion, et la deuxième bague de fixation 22 est plus particulièrement configurée pour être insérée dans la deuxième portion de montage 17 via la deuxième ouverture d'insertion.

Selon le mode de réalisation représenté sur les figures, la première bague de fixation 21 comporte un premier dispositif de verrouillage 23 configuré pour verrouiller, de manière réversible, la première bague de fixation 21 sur la première portion de montage 16, et la deuxième bague de fixation 22 comporte un deuxième dispositif de verrouillage 24 configuré pour verrouiller, de manière réversible, la deuxième bague de fixation 22 sur la deuxième portion de montage 17.

Le premier dispositif de verrouillage 23 comporte plus particulièrement deux premiers éléments de verrouillage 25, tels que des premiers bras de verrouillage ou des premières languettes de verrouillage, qui sont diamétralement opposés par rapport à un axe central du conduit flexible 15 et qui sont mobiles, et avantageusement élastiquement déformables, entre une configuration de verrouillage dans laquelle les deux premiers éléments de verrouillage 25 sont éloignés l'un de l'autre et sont configurés pour coopérer avec la première portion de montage 16 de manière à verrouiller la première bague de fixation 21 sur la première portion de montage 16, et une configuration de déverrouillage dans les deux premiers éléments de verrouillage 25 sont rapprochés l'un de l'autre et sont configurés pour libérer la première portion de montage 16 de manière à autoriser un retrait de la première bague de fixation 21 hors de la première portion de montage 16. L'un des deux premiers éléments de verrouillage 25 est notamment visible sur la figure 11, tandis que l'autre des deux premiers éléments de verrouillage 25 est notamment visible sur la figure 4.

De façon similaire, le deuxième dispositif de verrouillage 24 comporte deux deuxièmes éléments de verrouillage 26, tels que des deuxièmes bras de verrouillage ou des deuxièmes languettes de verrouillage, qui sont diamétralement opposés par rapport à l'axe central du conduit flexible 15 et qui sont mobiles, et avantageusement élastiquement déformables, entre une configuration de verrouillage dans laquelle les deux deuxièmes éléments de verrouillage 26 sont éloignés l'un de l'autre et sont configurés pour coopérer avec la deuxième portion de montage 17 de manière à verrouiller la deuxième bague de fixation 22 sur la deuxième portion de montage 17, et une configuration de déverrouillage dans les deux deuxièmes éléments de verrouillage 26 sont rapprochés l'un de l'autre et sont configurés pour libérer la deuxième portion de montage 17 de manière à autoriser un retrait de la deuxième bague de fixation 22 hors de la deuxième portion de montage 17. L'un des deux deuxièmes éléments de verrouillage 26 est notamment visible sur la figure 11, tandis que l'autre des deux deuxièmes éléments de verrouillage 26 est notamment visible sur la figure 4.

Selon le mode de réalisation représenté sur les figures, la première bague de fixation 21 comporte un premier corps de bague annulaire 21.1 et chacun des premiers éléments de verrouillage 25 s'étend à partir du premier corps de bague annulaire 21.1 selon une direction d'extension qui est sensiblement parallèle à l'axe central du conduit flexible 15 lorsque ledit premier élément de verrouillage 25 occupe la configuration de verrouillage, et la deuxième bague de fixation 22 comporte un deuxième corps de bague annulaire 22.1 et chacun des deuxièmes éléments de verrouillage 26 s'étend à partir du deuxième corps de bague annulaire 22.1 selon une direction d'extension qui est également sensiblement parallèle à l'axe central du conduit flexible 15 lorsque ledit deuxième élément de verrouillage 26 occupe la configuration de verrouillage.

De façon avantageuse, chacun des premiers éléments de verrouillage 25 et des deuxièmes éléments de verrouillage 26 est configuré pour être accessible depuis l'extérieur du conduit d'aspirateur 5. Chaque premier élément de verrouillage 25 est plus particulièrement configuré pour être accessible depuis un côté latéral respectif de la première partie de conduit rigide 7, et chaque deuxième élément de verrouillage 26 est plus particulièrement configuré pour être accessible depuis un côté latéral respectif de la deuxième partie de conduit rigide 8.

Lorsque les première et deuxième parties de conduit rigides 7, 8 sont dans la configuration dépliée, chacun des premiers et deuxièmes éléments de verrouillage 25, 26 est disposé sur un côté latéral du conduit d'aspirateur 5 entre d'une part le dispositif d'articulation 9 et d'autre part l'organe de verrouillage 32. Une telle configuration permet d'accéder facilement aux deux premiers et aux deux deuxièmes éléments de verrouillage 25, 26 sans être gêné par le dispositif d'articulation 9 ou l'organe de verrouillage 32.

Selon le mode de réalisation représenté sur les figures, le premier dispositif de verrouillage 23 comporte deux premiers orifices de verrouillage 27 qui sont prévus sur la première portion de montage 16, et plus particulièrement sur deux portions latérales respectives de la première portion de montage 16, et qui sont configurés pour coopérer respectivement avec les deux premiers éléments de verrouillage 25 lorsque ces derniers sont dans la configuration de verrouillage. De façon similaire, le deuxième dispositif de verrouillage 24 comporte deux deuxièmes orifices de verrouillage 28 qui sont prévus sur la deuxième portion de montage 17, et plus particulièrement sur deux portions latérales respectives de la deuxième portion de montage 17, et qui sont configurés pour coopérer respectivement avec les deux deuxièmes éléments de verrouillage 26 lorsque ces derniers sont dans la configuration de verrouillage.

Chaque premier orifice de verrouillage 27 est plus particulièrement traversant et débouche dans une surface externe de la première portion de montage 16, de manière à permettre un accès au premier élément de verrouillage 25 respectif depuis l'extérieur du conduit d'aspirateur 5 et à permettre un déplacement du premier élément de verrouillage 25 respectif dans la configuration de déverrouillage, et chaque deuxième orifice de verrouillage 28 est plus particulièrement traversant et débouche dans une surface externe de la deuxième portion de montage 17, de manière à permettre un accès au deuxième élément de verrouillage 26 respectif depuis l'extérieur du conduit d'aspirateur 5 et à permettre un déplacement du deuxième élément de verrouillage 26 respectif dans la configuration de déverrouillage. Chacun des premiers orifices de verrouillage 27 et des deuxièmes orifices de verrouillage peut par exemple être oblong. De façon avantageuse, chaque premier orifice de verrouillage 27 est configuré pour être situé en regard d'un premier doigt de verrouillage équipant le premier élément de verrouillage 25 respectif, lorsque la première bague de fixation 21 est fixée à la première partie de conduit rigide 7, et chaque deuxième orifice de verrouillage 28 est configuré pour être situé en regard d'un deuxième doigt de verrouillage équipant le deuxième élément de verrouillage 26 respectif, lorsque la deuxième bague de fixation 22 est fixée à la deuxième partie de conduit rigide 8.

Comme montré sur la figure 11, le conduit flexible 15 comporte en outre un premier joint d'étanchéité annulaire 29 fixé à la première bague de fixation 21 et configuré pour coopérer de manière étanche avec la première partie de conduit rigide 7, et un deuxième joint d'étanchéité annulaire 31 fixé à la deuxième bague de fixation 22 et configuré pour coopérer de manière étanche avec la deuxième partie de conduit rigide 8.

Le conduit d'aspirateur 5 comporte également un organe de verrouillage 32, tel qu'une patte de verrouillage ou un loquet de verrouillage équipé(e) d'un doigt de verrouillage, configuré pour verrouiller les première et deuxième parties de conduit rigides 7, 8 dans la configuration dépliée. De façon avantageuse, l'organe de verrouillage 32 et le dispositif d'articulation 9 sont sensiblement diamétralement opposés par rapport à un axe longitudinal central B du conduit d'aspirateur 5 en configuration dépliée des première et deuxième parties de conduit rigides 7, 8.

L'organe de verrouillage 32 est monté pivotant sur la première partie de conduit rigide 7 autour d'un axe de pivotement C qui est parallèle à l'axe d'articulation A et entre une position de verrouillage dans laquelle l'organe de verrouillage 32 est configuré pour coopérer avec un élément de verrouillage 33 (visible à la figure 11), tel qu'un orifice de verrouillage apte à recevoir au moins partiellement le doigt de verrouillage précité, prévu sur la deuxième partie de conduit rigide 8 de manière à verrouiller les première et deuxième parties rigides 8, 9 dans la configuration dépliée, et une position de libération dans laquelle l'organe de verrouillage 32 est configuré pour libérer l'élément de verrouillage 33 de manière à permettre un pivotement des première et deuxième parties de conduit rigides 7, 8 dans la configuration pliée.

Le conduit d'aspirateur 5 comporte en outre un organe d'actionnement 34 configuré pour déplacer l'organe de verrouillage 32 dans la position de libération. De façon avantageuse, l'organe de verrouillage 32 et l'organe d'actionnement 34 sont réalisés en une seule pièce, et l'organe d'actionnement 34 s'étend dans le prolongement de l'organe de verrouillage 32.

L'organe d'actionnement 34 est solidaire en mouvement de l'organe de verrouillage 32, et est donc monté pivotant autour de l'axe de pivotement C et entre une position de repos (voir la figure 2) et une position de déverrouillage. Le conduit d'aspirateur 5 est plus particulièrement configuré de telle sorte qu'un déplacement de l'organe d'actionnement 34 de la position de repos à la position de déverrouillage entraîne un déplacement de l'organe de verrouillage 32 de la position de verrouillage à la position de libération.

L'organe d'actionnement 34 comporte une partie d'actionnement 35 configurée pour être actionnée manuellement par un utilisateur, et une partie de liaison 36 reliant la partie d'actionnement 35 à l'organe de verrouillage 32.

La partie d'actionnement 35 comporte plus particulièrement une surface d'appui 37 contre laquelle un utilisateur est apte à exercer une force d'appui, c'est-à-dire une pression, de manière à déplacer l'organe d'actionnement 34 dans la position de déverrouillage. Selon le mode de réalisation représenté sur les figures, la partie d'actionnement 35 comporte un bord transversal arrière qui définit le bord transversal arrière de l'organe d'actionnement 34.

De façon avantageuse, la partie d'actionnement 35 et l'organe de verrouillage 32 sont situés sur un même côté du conduit d'aspirateur 5 qui est diamétralement opposé au côté du conduit d'aspirateur 5 où est situé le dispositif d'articulation 9, et la partie d'actionnement 35 et l'organe de verrouillage 32 sont sensiblement alignés selon une direction longitudinale.

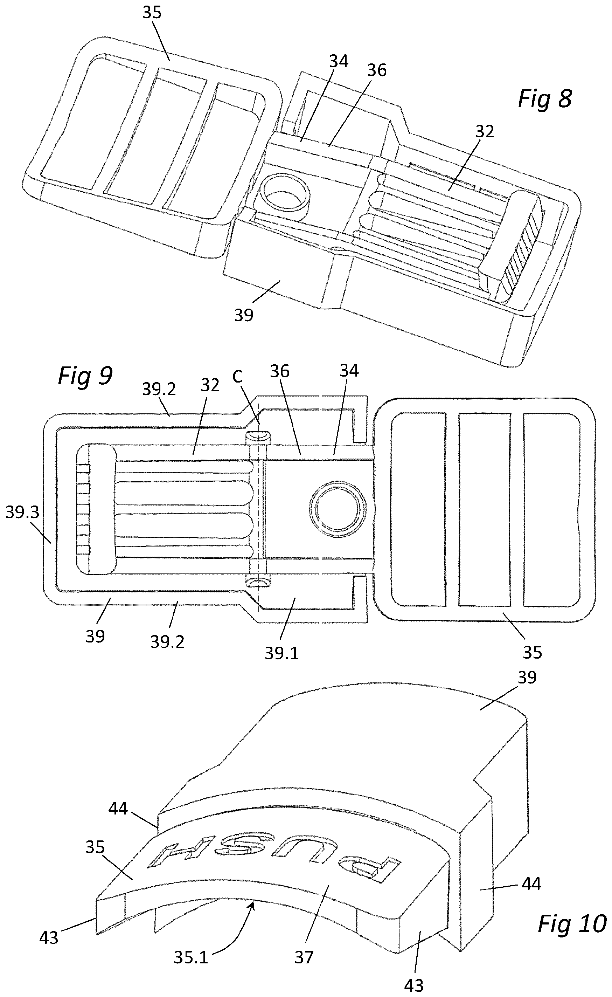

Comme montré sur la figure 10, la partie d'actionnement 35 est courbée et s'étend autour d'une portion de la périphérie extérieure de la première partie de conduit rigide 7. Ainsi, la face intérieure 35.1 de la partie d'actionnement 35, qui est située en regard de la première partie de conduit rigide 7, est concave et arrondie, et la surface d'appui 37 est convexe et arrondie. De façon avantageuse, la face intérieure 35.1 de la partie d'actionnement 35 présente une courbure sensiblement complémentaire de la courbure extérieure de la première partie de conduit rigide 7. Une telle configuration de l'organe d'actionnement 34 permet d'augmenter la course de déplacement, à savoir le débattement, de l'organe d'actionnement 34 lors de ses déplacements entres les positions de repos et de déverrouillage, tout en limitant l'encombrement de l'organe d'actionnement 34.

Selon le mode de réalisation représenté sur les figures, la partie de liaison 36 est allongée et s'étend parallèlement à l'axe longitudinal central B du conduit d'aspirateur 5 lorsque les première et deuxième parties de conduit rigides 7, 8 sont dans la configuration dépliée, et la partie d'actionnement 35 s'étend à partir d'un bord transversal arrière de la partie de liaison 36 et est donc située à l'opposé de l'organe de verrouillage 32 par rapport à l'axe de pivotement C. De façon avantageuse, la partie d'actionnement 35 est configurée pour être située intégralement en retrait d'un plan qui est parallèle à l'axe d'articulation A et qui contient l'axe longitudinal central B du conduit d'aspirateur 5 lorsque les première et deuxième parties de conduit rigides 7, 8 sont dans la configuration dépliée.

Selon le mode de réalisation représenté sur les figures, la partie d'actionnement 35 présente une première dimension longitudinale, mesurée parallèlement à l'axe longitudinal central B du conduit d'aspirateur 5 en configuration dépliée des première et deuxième parties de conduit rigides 7, 8, et l'organe de verrouillage 32 présente une deuxième dimension longitudinale, mesurée parallèlement à l'axe longitudinal central B du conduit d'aspirateur 5 en configuration dépliée des première et deuxième parties de conduit rigides 7, 8, qui est inférieure à la première dimension longitudinale. De façon avantageuse, l'organe de verrouillage 32 présente une dimension transversale, mesurée perpendiculairement à un plan longitudinal médian du conduit d'aspirateur 5 en configuration dépliée des première et deuxième parties de conduit rigides 7, 8, qui est inférieure à la première dimension longitudinale de la partie d'actionnement 35.

Le conduit d'aspirateur 5 comporte en outre un élément de sollicitation 38, tel qu'un ressort de sollicitation, configuré pour solliciter l'organe d'actionnement 34 dans la position de repos. Un tel élément de sollicitation 38 permet de définir une position de repos stable pour l'organe d'actionnement 34.

Le conduit d'aspirateur 5 comporte également un capot de recouvrement 39 qui est fixé à la première partie de conduit rigide 7 et qui est configuré pour s'étendre sous l'organe de verrouillage 32 et pour recouvrir intégralement la face inférieure de l'organe de verrouillage 32, c'est-à-dire la face de l'organe de verrouillage 32 qui est située à l'opposé de la première partie de conduit rigide 7.

Le capot de recouvrement 39 est en particulier configuré pour recouvrir une portion d'extrémité distale de l'organe de verrouillage 32. De façon avantageuse, le capot de recouvrement 39 est également configuré pour recouvrir intégralement les bords latéraux de l'organe de verrouillage 32, et pour rendre inaccessible l'organe de verrouillage 32 lorsque les première et deuxième parties de conduit rigides 7, 8 occupent la configuration dépliée. Un tel capot de recouvrement 39 limite considérablement les risques de grippage de l'organe de verrouillage 32 et également les risques de pincement des doigts d'un utilisateur lors d'un pivotement de l'organe de verrouillage 32 entre la position de verrouillage et la position de libération.

Le capot de recouvrement 39 comporte plus particulièrement une paroi de recouvrement principale 39.1 qui s'étend parallèlement à un axe central de la première partie de conduit rigide 7 et qui est configurée de telle sorte que, lorsque les première et deuxième parties de conduit rigides 7, 8 sont dans la configuration dépliée, la portion d'extrémité distale de l'organe de verrouillage 32 est disposée entre la paroi de recouvrement principale 39.1 et la deuxième partie de conduit rigide 8. La paroi de recouvrement principale 39.1 est configurée pour s'étendre sous l'organe de verrouillage 32 lorsque le conduit d'aspirateur 5 est dans une configuration normale d'utilisation.

Lorsque les première et deuxième parties de conduit rigides 7, 8 sont dans la configuration dépliée, la distance radiale entre une surface interne de la paroi de recouvrement principale 39.1 et une surface extérieure de la deuxième partie de conduit rigide 8 est suffisante pour autoriser un débattement de la portion d'extrémité distale de l'organe de verrouillage 32 lorsque l'organe de verrouillage 32 est déplacé de la position de verrouillage à la position de libération.

Le capot de recouvrement 39 comporte en outre deux parois latérales 39.2 s'étendant de part et d'autre de l'organe de verrouillage 32 et une paroi d'extrémité 39.3 située à l'opposé de la partie d'actionnement 35.

Selon le mode de réalisation représenté sur les figures, la deuxième partie de conduit rigide 8 et le capot de recouvrement 39 délimitent, lorsque les première et deuxième parties de conduit rigide 7, 8 sont dans la configuration dépliée, un logement interne dans lequel est logé l'organe de verrouillage 32.

De façon avantageuse, le capot de recouvrement 39 s'étend longitudinalement au-delà de l'axe de pivotement C de l'organe de verrouillage 32, mais l'organe d'actionnement 34 s'étend longitudinalement au-delà du capot de recouvrement 39 de telle sorte que la partie d'actionnement 35 ne soit pas recouverte par le capot de recouvrement 39, et ce afin de permettre un actionnement aisé de la partie d'actionnement 35 par un utilisateur.

Comme montré plus particulièrement sur les figures 2, la surface d'appui 37 est sensiblement affleurante avec une surface extérieure 41 du capot de recouvrement 39 lorsque l'organe d'actionnement 34 occupe la position de repos. A cet effet, l'organe d'actionnement 34 peut par exemple comporter un épaulement transversal 42 qui sépare la partie de liaison 36 et la partie d'actionnement 35 et qui est configuré de telle sorte qu'une surface inférieure de la partie de liaison 36 est surélevée par rapport à la surface d'appui 37, c'est-à-dire est décalée vers le haut par rapport à la surface d'appui 37, d'une distance correspondant sensiblement à l'épaisseur de la paroi de recouvrement principale 39.1 du capot de recouvrement 39.

De façon avantageuse, la partie d'actionnement 35 comporte deux surfaces latérales extérieures 43 qui sont également sensiblement affleurantes respectivement avec deux surfaces latérales extérieures 44 du capot de recouvrement 39 (voir la figure 3). Chaque surface latérale extérieure 43 de la partie d'actionnement 35 peut avantageusement être parallèle à la surface latérale extérieure 44 respective du capot de recouvrement 39.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Conduit d'aspirateur (5) définissant un passage d'écoulement d'air et comprenant :
- une première partie de conduit rigide (7) et une deuxième partie de conduit rigide (8),
- un conduit flexible (15) reliant les première et deuxième parties de conduit rigides (7, 8) et définissant au moins partiellement le passage d'écoulement d'air, le conduit flexible (15) comportant une partie tubulaire flexible (19), une première bague de fixation (21) qui est fixée à une première portion d'extrémité de la partie tubulaire flexible (19), et une deuxième bague de fixation (22) qui est fixée à une deuxième portion d'extrémité de la partie tubulaire flexible (19),
- un dispositif d'articulation (9) reliant les première et deuxième parties de conduit rigides (7, 8) entre elles, le dispositif d'articulation (9) comportant un axe d'articulation (A) et étant configuré pour permettre un pivotement de la première partie de conduit rigide (7) par rapport à la deuxième partie de conduit rigide (8) autour de l'axe d'articulation (A) et entre une configuration dépliée dans laquelle les première et deuxième parties de conduit rigides (7, 8) sont sensiblement alignées l'une par rapport à l'autre et une configuration pliée dans laquelle les première et deuxième parties de conduit rigides (7, 8) définissent entre elles un angle inférieur à 180°,
- un organe de verrouillage (32) configuré pour verrouiller, de manière réversible, les première et deuxième parties de conduit rigides (7, 8) dans la configuration dépliée,
**caractérisé en ce que** la première bague de fixation (21) est configurée pour être fixée de manière amovible à la première partie de conduit rigide (7), et la deuxième bague de fixation (22) est configurée pour être fixée de manière amovible à la deuxième partie de conduit rigide (8).

2. Conduit d'aspirateur (5) selon la revendication 1, dans lequel la première bague de fixation (21) comporte un premier dispositif de verrouillage (23) configuré pour verrouiller, de manière réversible, la première bague de fixation (21) sur la première partie de conduit rigide (7), et la deuxième bague de fixation (22) comporte un deuxième dispositif de verrouillage (24) configuré pour verrouiller, de manière réversible, la deuxième bague de fixation (22) sur la deuxième partie de conduit rigide (8).

3. Conduit d'aspirateur (5) selon la revendication 2, dans lequel le premier dispositif de verrouillage (23) comporte au moins un premier élément de verrouillage (25) mobile entre une configuration de verrouillage dans laquelle l'au moins un premier élément de verrouillage (25) est configuré pour coopérer avec la première partie de conduit rigide (7) de manière à verrouiller la première bague de fixation (21) sur la première partie de conduit rigide (7), et une configuration de déverrouillage dans lequel l'au moins un premier élément de verrouillage (25) est configuré pour libérer la première partie de conduit rigide (7) de manière à autoriser un retrait de la première bague de fixation (21) hors de la première partie de conduit rigide (7), et dans lequel le deuxième dispositif de verrouillage (24) comporte au moins un deuxième élément de verrouillage (26) mobile entre une configuration de verrouillage dans laquelle l'au moins un deuxième élément de verrouillage (26) est configuré pour coopérer avec la deuxième partie de conduit rigide (8) de manière à verrouiller la deuxième bague de fixation (22) sur la deuxième partie de conduit rigide (8), et une configuration de déverrouillage dans lequel l'au moins un deuxième élément de verrouillage (26) est configuré pour libérer la deuxième partie de conduit rigide (8) de manière à autoriser un retrait de la deuxième bague de fixation (22) hors de la deuxième partie de conduit rigide (8).

4. Conduit d'aspirateur (5) selon la revendication 3, dans lequel chacun de l'au moins un premier élément de verrouillage (25) et de l'au moins un deuxième élément de verrouillage (26) est élastiquement déformable entre la configuration de verrouillage et la configuration de déverrouillage.

5. Conduit d'aspirateur (5) selon la revendication 3 ou 4, dans lequel chacun de l'au moins un premier élément de verrouillage (25) et de l'au moins un deuxième élément de verrouillage (26) est situé sur un côté latéral du conduit d'aspirateur (5).

6. Conduit d'aspirateur (5) selon l'une quelconque des revendications 3 à 5, dans lequel chacun de l'au moins un premier élément de verrouillage (25) et de l'au moins un deuxième élément de verrouillage (26) est accessible depuis l'extérieur du conduit d'aspirateur (5).

7. Conduit d'aspirateur (5) selon l'une quelconque des revendications 3 à 6, dans lequel l'au moins un premier élément de verrouillage (25) est configuré pour être accessible depuis un côté latéral de la première partie de conduit rigide (7), et l'au moins un deuxième élément de verrouillage (26) est configuré pour être accessible depuis un côté latéral de la deuxième partie de conduit rigide (8).

8. Conduit d'aspirateur (5) selon l'une quelconque des revendications 3 à 7, dans lequel le premier dispositif de verrouillage (23) comporte au moins un premier orifice de verrouillage (27) qui est prévu sur la première partie de conduit rigide (7) et qui est configuré pour coopérer avec l'au moins un premier élément de verrouillage (25) lorsque l'au moins un premier élément de verrouillage est dans la configuration de verrouillage, et le deuxième dispositif de verrouillage (24) comporte au moins un deuxième orifice de verrouillage (28) qui est prévu sur la deuxième partie de conduit rigide (8) et qui est configuré pour coopérer avec l'au moins un deuxième élément de verrouillage (26) lorsque l'au moins un deuxième élément de verrouillage (26) est dans la configuration de verrouillage.

9. Conduit d'aspirateur (5) selon la revendication 8, dans lequel l'au moins un premier orifice de verrouillage (27) débouche dans une surface externe de la première partie de conduit rigide (7) et est configuré pour permettre un accès à l'au moins un premier élément de verrouillage (25) depuis l'extérieur du conduit d'aspirateur (5) et pour permettre un déplacement de l'au moins un premier élément de verrouillage (25) dans la configuration de déverrouillage, et l'au moins un deuxième orifice de verrouillage (28) débouche dans une surface externe de la deuxième partie de conduit rigide (8) et est configuré pour permettre un accès à l'au moins un deuxième élément de verrouillage (26) depuis l'extérieur du conduit d'aspirateur (5) et pour permettre un déplacement de l'au moins un deuxième élément de verrouillage (26) dans la configuration de déverrouillage.

10. Conduit d'aspirateur (5) selon la revendication 9, dans lequel l'au moins un premier orifice de verrouillage (27) est prévu sur une portion latérale de la première partie de conduit rigide (7), et l'au moins un deuxième orifice de verrouillage (26) est prévu sur une portion latérale de la deuxième partie de conduit rigide (8).

11. Conduit d'aspirateur (5) selon l'une quelconque des revendications 3 à 10, dans lequel le premier dispositif de verrouillage (23) comporte deux premiers éléments de verrouillage (25) qui sont diamétralement opposés par rapport à un axe central du conduit flexible (15), et le deuxième dispositif de verrouillage (24) comporte deux deuxièmes éléments de verrouillage (26) qui sont diamétralement opposés par rapport à l'axe central du conduit flexible (15).

12. Conduit d'aspirateur (5) selon l'une quelconque des revendications 1 à 11, dans lequel le conduit flexible (15) comporte un premier joint d'étanchéité annulaire (29) fixé à la première bague de fixation (21) et configuré pour coopérer de manière étanche avec la première partie de conduit rigide (7), et un deuxième joint d'étanchéité annulaire (31) fixé à la deuxième bague de fixation (22) et configuré pour coopérer de manière étanche avec la deuxième partie de conduit rigide (8).

13. Conduit d'aspirateur (5) selon l'une quelconque des revendications 1 à 12, dans lequel la première partie de conduit rigide (7) comporte une première portion de montage (16) qui est tubulaire et qui est pourvue d'une première ouverture d'insertion, et la deuxième partie de conduit rigide (8) comporte une deuxième portion de montage (17) qui est tubulaire et qui est pourvue d'une deuxième ouverture d'insertion, la première bague de fixation (21) étant configurée pour être insérée dans la première portion de montage (16) via la première ouverture d'insertion et la deuxième bague de fixation (22) étant configurée pour être insérée dans la deuxième portion de montage (17) via la deuxième ouverture d'insertion.

14. Conduit d'aspirateur (5) selon l'une quelconque des revendications 1 à 13, dans lequel la première partie de conduit rigide (7) est configurée pour être reliée fluidiquement à un boîtier d'aspirateur (3) équipé d'une unité d'aspiration (6), et la deuxième partie de conduit rigide (8) est configurée pour être reliée fluidiquement à un suceur (4) configuré pour être en contact avec un sol à nettoyer.

15. Aspirateur (2) comportant :
- un boîtier d'aspirateur (3) équipé d'une unité d'aspiration,
- un suceur (4) configuré pour être en contact avec un sol à nettoyer, et
- un conduit d'aspirateur (5) selon l'une quelconque des revendications précédentes, le conduit d'aspirateur (5) reliant mécaniquement et fluidiquement le boîtier d'aspirateur (3) au suceur (4).

## Patentansprüche

1. Staubsaugerkanal (5), der einen Luftströmungskanal definiert und umfasst:
• einen ersten starren Kanalteil (7) und einen zweiten starren Kanalteil (8),
• einen flexiblen Kanal (15), der die ersten und zweiten starren Kanalteile (7, 8) verbindet und zumindest teilweise den Luftströmungskanal definiert, wobei der flexible Kanal (15) einen flexiblen Rohrabschnitt (19), einen ersten Befestigungsring (21), der an einem ersten Endabschnitt des flexiblen Rohrabschnitts (19) befestigt ist, und einen zweiten Befestigungsring (22), der an einem zweiten Endabschnitt des flexiblen Rohrabschnitts (19) befestigt ist, umfasst,
• eine Gelenkvorrichtung (9), die die ersten und zweiten starren Kanalteile (7, 8) miteinander verbindet, wobei die Gelenkvorrichtung (9) eine Gelenkachse (A) umfasst und so konfiguriert ist, dass sie ein Schwenken des ersten starren Kanalteils (7) relativ zum zweiten starren Kanalteil (8) um die Gelenkachse (A) und zwischen einer ausgefalteten Konfiguration, in der die ersten und zweiten starren Kanalteile (7, 8) im Wesentlichen zueinander ausgerichtet sind, und einer gefalteten Konfiguration, in der die ersten und zweiten starren Kanalteile (7, 8) einen Winkel von weniger als 180° zwischen sich definieren, ermöglicht,
• ein Verriegelungsorgan (32), das so konfiguriert ist, dass es die ersten und zweiten starren Kanalteile (7, 8) reversibel in der ausgefalteten Konfiguration verriegelt, **dadurch gekennzeichnet, dass** der erste Befestigungsring (21) so konfiguriert ist, dass er abnehmbar am ersten starren Kanalteil (7) befestigt werden kann, und der zweite Befestigungsring (22) so konfiguriert ist, dass er abnehmbar am zweiten starren Kanalteil (8) befestigt werden kann.

2. Staubsaugerkanal (5) nach Anspruch 1, wobei der erste Befestigungsring (21) eine erste Verriegelungsvorrichtung (23) umfasst, die so konfiguriert ist, dass sie den ersten Befestigungsring (21) reversibel am ersten starren Kanalteil (7) verriegelt, und der zweite Befestigungsring (22) eine zweite Verriegelungsvorrichtung (24) umfasst, die so konfiguriert ist, dass sie den zweiten Befestigungsring (22) reversibel am zweiten starren Kanalteil (8) verriegelt.

3. Staubsaugerkanal (5) nach Anspruch 2, wobei die erste Verriegelungsvorrichtung (23) mindestens ein erstes Verriegelungselement (25) umfasst, das zwischen einer Verriegelungskonfiguration, in der das mindestens eine erste Verriegelungselement (25) konfiguriert ist, um mit dem ersten starren Kanalteil (7) zu kooperieren, um den ersten Befestigungsring (21) am ersten starren Kanalteil (7) zu verriegeln, und einer Entriegelungskonfiguration, in der das mindestens eine erste Verriegelungselement (25) so konfiguriert ist, dass es den ersten starren Kanalteil (7) freigibt, um eine Entfernung des ersten Befestigungsrings (21) vom ersten starren Kanalteil (7) zu ermöglichen, und wobei die zweite Verriegelungsvorrichtung (24) mindestens ein zweites Verriegelungselement (26) umfasst, das zwischen einer Verriegelungskonfiguration, in der das mindestens eine zweite Verriegelungselement (26) konfiguriert ist, um mit dem zweiten starren Kanalteil (8) zu kooperieren, um den zweiten Befestigungsring (22) am zweiten starren Kanalteil (8) zu verriegeln, und einer Entriegelungskonfiguration, in der das mindestens eine zweite Verriegelungselement (26) so konfiguriert ist, dass es den zweiten starren Kanalteil (8) freigibt, um eine Entfernung des zweiten Befestigungsrings (22) vom zweiten starren Kanalteil (8) zu ermöglichen.

4. Staubsaugerkanal (5) nach Anspruch 3, wobei jedes der mindestens einen ersten Verriegelungselemente (25) und des mindestens einen zweiten Verriegelungselementes (26) elastisch verformbar ist zwischen der Verriegelungskonfiguration und der Entriegelungskonfiguration.

5. Staubsaugerkanal (5) nach Anspruch 3 oder 4, wobei jedes der mindestens einen ersten Verriegelungselemente (25) und des mindestens einen zweiten Verriegelungselementes (26) an einer Seite des Staubsaugerkanals (5) angeordnet ist.

6. Staubsaugerkanal (5) nach einem der Ansprüche 3 bis 5, wobei jedes der mindestens einen ersten Verriegelungselemente (25) und des mindestens einen zweiten Verriegelungselementes (26) von außen zugänglich ist.

7. Staubsaugerkanal (5) nach einem der Ansprüche 3 bis 6, wobei mindestens ein erstes Verriegelungselement (25) so konfiguriert ist, dass es von einer Seite des ersten starren Kanalteils (7) zugänglich ist, und mindestens ein zweites Verriegelungselement (26) so konfiguriert ist, dass es von einer Seite des zweiten starren Kanalteils (8) zugänglich ist.

8. Staubsaugerkanal (5) nach einem der Ansprüche 3 bis 7, wobei die erste Verriegelungsvorrichtung (23) mindestens ein erstes Verriegelungsloch (27) umfasst, das am ersten starren Kanalteil (7) vorgesehen ist und dafür konfiguriert ist, mit dem mindestens einen ersten Verriegelungselement (25) zu kooperieren, wenn das mindestens eine erste Verriegelungselement in der Verriegelungskonfiguration ist, und die zweite Verriegelungsvorrichtung (24) umfasst mindestens ein zweites Verriegelungsloch (28), das am zweiten starren Kanalteil (8) vorgesehen ist und dafür konfiguriert ist, mit dem mindestens einen zweiten Verriegelungselement (26) zu kooperieren, wenn das mindestens eine zweite Verriegelungselement (26) in der Verriegelungskonfiguration ist.

9. Staubsaugerkanal (5) nach Anspruch 8, wobei das mindestens eine erste Verriegelungsloch (27) in eine äußere Oberfläche des ersten starren Kanalteils (7) mündet und dafür konfiguriert ist, von außen Zugriff auf das mindestens eine erste Verriegelungselement (25) zu ermöglichen und eine Bewegung des mindestens einen ersten Verriegelungselementes (25) in der Entriegelungskonfiguration zu ermöglichen, und das mindestens eine zweite Verriegelungsloch (28) in eine äußere Oberfläche des zweiten starren Kanalteils (8) mündet und dafür konfiguriert ist, von außen Zugriff auf das mindestens eine zweite Verriegelungselement (26) zu ermöglichen und eine Bewegung des mindestens einen zweiten Verriegelungselementes (26) in der Entriegelungskonfiguration zu ermöglichen.

10. Staubsaugerkanal (5) nach Anspruch 9, wobei das mindestens eine erste Verriegelungsloch (27) an einem seitlichen Abschnitt des ersten starren Kanalteils (7) vorgesehen ist, und das mindestens eine zweite Verriegelungsloch (26) an einem seitlichen Abschnitt des zweiten starren Kanalteils (8) vorgesehen ist.

11. Staubsaugerkanal (5) nach einem der Ansprüche 3 bis 10, wobei die erste Verriegelungsvorrichtung (23) zwei erste Verriegelungselemente (25) umfasst, die sich diametral gegenüber einem zentralen Achse des flexiblen Kanals (15) befinden, und die zweite Verriegelungsvorrichtung (24) umfasst zwei zweite Verriegelungselemente (26), die sich diametral gegenüber der zentralen Achse des flexiblen Kanals (15) befinden.

12. Staubsaugerkanal (5) nach einem der Ansprüche 1 bis 11, wobei der flexible Kanal (15) einen ersten ringförmigen Dichtungsring (29) umfasst, der am ersten Befestigungsring (21) befestigt ist und dafür konfiguriert ist, dichtend mit dem ersten starren Kanalteil (7) zu kooperieren, und einen zweiten ringförmigen Dichtungsring (31), der am zweiten Befestigungsring (22) befestigt ist und dafür konfiguriert ist, dichtend mit dem zweiten starren Kanalteil (8) zu kooperieren.

13. Staubsaugerkanal (5) nach einem der Ansprüche 1 bis 12, wobei der erste starre Kanalteil (7) einen ersten Montageabschnitt (16) umfasst, der röhrenförmig ist und mit einer ersten Einführungsöffnung versehen ist, und der zweite starre Kanalteil (8) einen zweiten Montageabschnitt (17) umfasst, der röhrenförmig ist und mit einer zweiten Einführungsöffnung versehen ist, wobei der erste Befestigungsring (21) so konfiguriert ist, dass er in den ersten Montageabschnitt (16) durch die erste Einführungsöffnung eingeführt wird und der zweite Befestigungsring (22) so konfiguriert ist, dass er in den zweiten Montageabschnitt (17) durch die zweite Einführungsöffnung eingeführt wird.

14. Staubsaugerkanal (5) nach einem der Ansprüche 1 bis 13, wobei der erste starre Kanalteil (7) so konfiguriert ist, dass er fluidisch mit einem Staubsaugergehäuse (3) verbunden ist, das mit einer Saugeinheit (6) ausgestattet ist, und der zweite starre Kanalteil (8) so konfiguriert ist, dass er fluidisch mit einer Düse (4) verbunden ist, die dafür konfiguriert ist, mit einem zu reinigenden Boden in Kontakt zu sein.

15. Staubsauger (2), der umfasst:
• ein Staubsaugergehäuse (3), das mit einer Saugeinheit ausgestattet ist,
• eine Düse (4), die dafür konfiguriert ist, mit einem zu reinigenden Boden in Kontakt zu sein, und
• einen Staubsaugerkanal (5) nach einem der vorangehenden Ansprüche, wobei der Staubsaugerkanal (5) das Staubsaugergehäuse (3) mechanisch und fluidisch mit der Düse (4) verbindet.

## Claims

1. Vacuum cleaner conduit (5) defining an airflow passage and comprising:
• a first rigid conduit part (7) and a second rigid conduit part (8),
• a flexible conduit (15) connecting the first and second rigid conduit parts (7, 8) and defining at least partially the airflow passage, the flexible conduit (15) comprising a flexible tubular portion (19), a first fastening ring (21) which is attached to a first end portion of the flexible tubular portion (19), and a second fastening ring (22) which is attached to a second end portion of the flexible tubular portion (19),
• a hinge device (9) connecting the first and second rigid conduit parts (7, 8) to each other, the hinge device (9) comprising a hinge axis (A) and being configured to allow pivoting of the first rigid conduit part (7) with respect to the second rigid conduit part (8) around the hinge axis (A) and between an unfolded configuration in which the first and second rigid conduit parts (7, 8) are substantially aligned with each other and a folded configuration in which the first and second rigid conduit parts (7, 8) define an angle of less than 180° between them,
• a locking member (32) configured to reversibly lock the first and second rigid conduit parts (7, 8) in the unfolded configuration, **characterized in that** the first fastening ring (21) is configured to be detachably attached to the first rigid conduit part (7), and the second fastening ring (22) is configured to be detachably attached to the second rigid conduit part (8).

2. Vacuum cleaner conduit (5) according to claim 1, wherein the first fastening ring (21) comprises a first locking device (23) configured to reversibly lock the first fastening ring (21) on the first rigid conduit part (7), and the second fastening ring (22) comprises a second locking device (24) configured to reversibly lock the second fastening ring (22) on the second rigid conduit part (8).

3. Vacuum cleaner conduit (5) according to claim 2, wherein the first locking device (23) includes at least one first locking element (25) movable between a locking configuration in which the at least one first locking element (25) is configured to cooperate with the first rigid conduit part (7) to lock the first fastening ring (21) on the first rigid conduit part (7), and an unlocking configuration in which the at least one first locking element (25) is configured to release the first rigid conduit part (7) allowing removal of the first fastening ring (21) from the first rigid conduit part (7), and wherein the second locking device (24) includes at least one second locking element (26) movable between a locking configuration in which the at least one second locking element (26) is configured to cooperate with the second rigid conduit part (8) to lock the second fastening ring (22) on the second rigid conduit part (8), and an unlocking configuration in which the at least one second locking element (26) is configured to release the second rigid conduit part (8) allowing removal of the second fastening ring (22) from the second rigid conduit part (8).

4. Vacuum cleaner conduit (5) according to claim 3, wherein each of the at least one first locking element (25) and the at least one second locking element (26) is elastically deformable between the locking configuration and the unlocking configuration.

5. Vacuum cleaner conduit (5) according to claim 3 or 4, wherein each of the at least one first locking element (25) and the at least one second locking element (26) is located on a lateral side of the vacuum cleaner conduit (5).

6. Vacuum cleaner conduit (5) according to any one of claims 3 to 5, wherein each of the at least one first locking element (25) and the at least one second locking element (26) is accessible from outside the vacuum cleaner conduit (5).

7. Vacuum cleaner conduit (5) according to any one of claims 3 to 6, wherein the at least one first locking element (25) is configured to be accessible from a lateral side of the first rigid conduit part (7), and the at least one second locking element (26) is configured to be accessible from a lateral side of the second rigid conduit part (8).

8. Vacuum cleaner conduit (5) according to any one of claims 3 to 7, wherein the first locking device (23) includes at least one first locking orifice (27) provided on the first rigid conduit part (7) and configured to cooperate with the at least one first locking element (25) when the at least one first locking element is in the locking configuration, and the second locking device (24) includes at least one second locking orifice (28) provided on the second rigid conduit part (8) and configured to cooperate with the at least one second locking element (26) when the at least one second locking element (26) is in the locking configuration.

9. Vacuum cleaner conduit (5) according to claim 8, wherein the at least one first locking orifice (27) opens into an external surface of the first rigid conduit part (7) and is configured to allow access to the at least one first locking element (25) from outside the vacuum cleaner conduit (5) and to allow movement of the at least one first locking element (25) in the unlocking configuration, and the at least one second locking orifice (28) opens into an external surface of the second rigid conduit part (8) and is configured to allow access to the at least one second locking element (26) from outside the vacuum cleaner conduit (5) and to allow movement of the at least one second locking element (26) in the unlocking configuration.

10. Vacuum cleaner conduit (5) according to claim 9, wherein the at least one first locking orifice (27) is provided on a lateral portion of the first rigid conduit part (7), and the at least one second locking orifice (26) is provided on a lateral portion of the second rigid conduit part (8).

11. Vacuum cleaner conduit (5) according to any one of claims 3 to 10, wherein the first locking device (23) includes two first locking elements (25) that are diametrically opposed with respect to a central axis of the flexible conduit (15), and the second locking device (24) includes two second locking elements (26) that are diametrically opposed with respect to the central axis of the flexible conduit (15).

12. Vacuum cleaner conduit (5) according to any one of claims 1 to 11, wherein the flexible conduit (15) comprises a first annular sealing ring (29) attached to the first fastening ring (21) and configured to cooperate sealingly with the first rigid conduit part (7), and a second annular sealing ring (31) attached to the second fastening ring (22) and configured to cooperate sealingly with the second rigid conduit part (8).

13. Vacuum cleaner conduit (5) according to any one of claims 1 to 12, wherein the first rigid conduit part (7) comprises a first mounting portion (16) that is tubular and provided with a first insertion opening, and the second rigid conduit part (8) comprises a second mounting portion (17) that is tubular and provided with a second insertion opening, the first fastening ring (21) being configured to be inserted into the first mounting portion (16) via the first insertion opening and the second fastening ring (22) being configured to be inserted into the second mounting portion (17) via the second insertion opening.

14. Vacuum cleaner conduit (5) according to any one of claims 1 to 13, wherein the first rigid conduit part (7) is configured to be fluidly connected to a vacuum cleaner housing (3) equipped with a suction unit (6), and the second rigid conduit part (8) is configured to be fluidly connected to a nozzle (4) configured to be in contact with a floor to be cleaned.

15. Vacuum cleaner (2) comprising:
• a vacuum cleaner housing (3) equipped with a suction unit,
• a nozzle (4) configured to be in contact with a floor to be cleaned, and
• a vacuum cleaner conduit (5) according to any one of the preceding claims, the vacuum cleaner conduit (5) mechanically and fluidly connecting the vacuum cleaner housing (3) to the nozzle (4).
